# EUROPÄISCHE PATENTSCHRIFT

(11) **EP 1 165 719 B1**
(45) Veröffentlichungstag und Bekanntmachung des Hinweises auf die Patenterteilung: **05.11.2003**
(21) Anmeldenummer: 00926835.0
(22) Anmeldetag: 06.04.2000
(51) Int. Cl.: C09K 3/10

(54) **DICHTUNGSMATERIAL, ABDICHTUNG SOWIE VERFAHREN ZUR ABDICHTUNG VON ÖFFNUNGEN UND DEREN VERWENDUNG**
SEALING MATERIAL, SEAL AND METHOD FOR SEALING OPENINGS AND USE THEREOF
MATERIAU D'ETANCHEIFICATION, ETANCHEIFICATION, PROCEDE D'ETANCHEIFICATION D'OUVERTURES, ET UTILISATION

(30) Priorität: 07.04.1999 DE 19915667
(43) Veröffentlichungstag der Anmeldung: 02.01.2002
(73) Patentinhaber: Fraunhofer-Gesellschaft zur Förderung der angewandten Forschung e.V., 80636 München (DE)
(72) Erfinder: GERIGK, Werner, D-46147 Oberhausen (DE); WACK, Holger, D-44137 Dortmund (DE); GROSS, Hans-Jürgen, D-45661 Recklinghausen (DE)
(74) Vertreter: Pfenning, Meinig & Partner GbR
(86) Internationale Anmeldenummer: EP0003094
(87) Internationale Veröffentlichungsnummer: WO00060017

(56) Entgegenhaltungen:
- EP-A- 0 980 904
- DE-U1- 9 301 440
- US-A- 4 837 077
- DATABASE WPI Section Ch, Week 198632 Derwent Publications Ltd., London, GB; Class A97, AN 1986-208883 XP002147652 & JP 61 141760 A (MIYATA KOGYO KK), 28. Juni 1986 (1986-06-28)
- PATENT ABSTRACTS OF JAPAN vol. 008, no. 093 (C-220), 27. April 1984 (1984-04-27) & JP 59 008753 A (SUMITOMO KAGAKU KOGYO KK), 18. Januar 1984 (1984-01-18)

## Beschreibung

Die vorliegende Erfindung betrifft ein Dichtungsmaterial sowie die dauerhafte Abdichtung von Durchführungen, wie beispielsweise Mauerdurchführungen gegen anstehendes und/oder drückendes Grund- oder Oberflächenwasser, Rohren und Manschetten im Bereich der Fernwärmesysteme, Muffen und Kabeln im Bereich der Kabelabdichtungen, Kabel und Verschlußkästen im Bereich der Automobilindustrie und dergleichen. Derartige Abdichtungen werden überall dort benötigt, wo Leitungen, wie beispielsweise Rohrleitungen, elektrische Leitungen oder sonstige Anschlußleitungen, wie z.B. Hausanschlüsse, durch Öffnungen durchgeführt werden, an die Wasser, beispielsweise Grundwasser, Oberflächenwasser oder Spritzwasser ansteht.

Nach dem Stand der Technik werden zur Einbringung von erdverlegten Versorgungsleitungen oder bei Hausanschlüssen Durchbrüche im Mauerwerk geschaffen, durch die die verschiedenen Hausanschlüsse, wie beispielsweise Versorgungsleitungen, Kabel oder Zugrohre geführt werden. Um das Eindringen von Grundwasser oder Oberflächenwasser zu verhindern, werden die Durchbrüche nach der Durchführung der Versorgungsleitungen wieder abgedichtet. Hierzu werden verschiedene Dichtungstechniken eingesetzt, die auch unter widrigen Betriebsbedingungen ein dauerhaftes Eindringen von Wasser verhindern sollen.

Hierzu werden beispielsweise Verschraubungen aus Kautschuk-Elastomer verwendet, bei deren sachgemäßer Verwendung ein hoher Sicherheitsstandard erreicht werden kann. Unter ungünstigen Bedingungen (ungeeignete Durchbruchform) oder bei fehlerhafter Ausführung kann jedoch keine dauerhafte Abdichtung gewährleistet werden. Weiterhin sind derartige Verschraubungen mit Kautschuk-Elastomer vergleichsweise teuer und stehen nur für bestimmte Abmessungen zur Verfügung.

Einfache Methoden der Abdichtung bestehen im Ausschäumen mit Polyurethanschaum oder Abdichtung des Durchbruchs mit Beton oder Bitumen. Diese führen aber häufig zu Leckagen, da keine dauerhafte Dichtheit gewährleistet werden kann. Diese Leckagen werden insbesondere durch ungenaue Anschlüsse, durch Fugen oder Risse oder auch durch unsachgemäße Materialverwendung verursacht. Fugen und Risse können bei dieser Dichttechnik daher nicht gänzlich verschlossen werden.

Dadurch ergibt sich die Notwendigkeit, die erdverlegten Anschlüsse fortlaufend instand zu setzen. In der Vielzahl der Schadensfälle muß dabei die Leitung großräumig freigelegt werden. Dies ist sehr arbeitsund kostenintensiv. Nachsorgende Maßnahmen, wie Abdichtung durch Polyurethanschaum, Beton oder Bitumen sind im allgemeinen nicht geeignet, die Leckage dauerhaft und zuverlässig wartungsfrei abzudichten.

Ein Beispiel für eine Abdichtung einer Hauseinführung für erdverlegte Hausanschlüsse nach dem Stand der Technik zeigt beispielsweise die DE 37 10 194 A1. In dieser Druckschrift wird eine Abdichtung für eine Rohrdurchführung offenbart, bei der der Zwischenraum zwischen dem Mantelrohr und dem Mauerdurchbruch mit einem vergußfähigen quellbaren Mörtel gefüllt wird. Nach dem Aufquellen und Ausfüllen der Öffnung zwischen dem Mantelrohr und dem Mauerdurchbruch härtet dieser Mörtel anschließend vollständig aus und ist im folgenden während der gesamten Lebensdauer der Abdichtung nicht mehr quellfähig. Bei später auftretenden Leckagen, beispielsweise aufgrund von Verschiebungen zwischen Mantelrohr und Mauerdurchbruch gewährleistet der vergossene Mörtel nicht mehr die vollständige Abdichtung gegen anstehendes Grund- oder Oberflächenwasser.

Demgegenüber sieht das deutsche Gebrauchsmuster G 93 01 440 U1 ein Abdichtmaterial vor, das mindestens eine Feuchtigkeit aufnehmende quellstofftragende Schicht aufweist. Der in diese Schicht integrierte tuellen Beschädigung der Schicht die eindringende Feuchtigkeit auf und bildet zuerst durch die auftretende Volumenvergrößerung eine selbstätige Sperre. Nachteilig bei dem hier vorgeschlagenen Aufbau ist jedoch, daß der Quellstoff im wesentlichen dadurch wirkt, daß er die Feuchtigkeit aufnimmt. Er entwikkelt jedoch keine Sperrwirkung, da er auf der dem anstehenden Wasser gegenüberliegenden Seite die aufgenommene Feuchtigkeit wieder abgeben kann. Daher sieht die G 93 01 440.6 auch eine weitere quellstofffreie Folie vor, um die Sperrwirkung des Quellstoffs zu verbessern.

Es hat sich hier jedoch gezeigt, daß die beschriebenen quellfähigen Polymere aufgrund Ihrer starken Staubneigung nicht zur Herstellung großer Stückzahlen von Abdichtungsmaterialien geeignet sind. Denn durch diese hohe Staubneigung können arbeitshygienische Bedingungen nur unter hohem Aufwand eingehalten werden und bewegliche Maschinenteile unterliegen einem erhöhten Verschleiß.

Vor dem Hintergrund der bisher verwendeten Abdichtungstechniken für Mauerdurchführungen stellt sich die vorliegende Erfindung die Aufgabe, ein Dichtmaterial, eine Abdichtung sowie ein Verfahren zur Abdichtung von Durchführungen zur Verfügung zu stellen, die in großen Stückzahlen bzw. Mengen einfach und kostengünstig herstellbar sind und zuverlässig eine vollständige Abdichtung gegen anstehendes Grund- oder Oberflächenwasser wartungsfrei gewährleisten.

Diese Aufgabe wird durch das Dichtungsmaterial nach Anspruch 1, die Abdichtung nach Anspruch 24, das Verfahren zur Abdichtung nach Anspruch 36 sowie die Verwendungen dieses Dichtmaterials, dieser Abdichtungen und Verfahren nach Anspruch 42 gelöst. Vorteilhafte Weiterbildungen des erfindungsgemäßen Dichtmaterials, der erfindungsgemäßen Abdichtung, des erfindungsgemäßen Verfahrens sowie der erfindungsgemäßen Verwendungen werden in den abhängigen Ansprüchen gegeben.

Erfindungsgemäß weist das Dichtungsmaterial ein quellfähiges Polymer und weitere Füllstoffe auf, wobei die Polymere und die Füllstoffe im wesentlichen eine Korngröße zwischen 5 µm und 800 µm, vorteilhafterweise zwischen 100 und 400 µm aufweisen. Als Füllstoff wird zumindest teilweise Gummimehl verwendet. Durch diese gezielte Polymerkonfektionierung und - compoundierung ergibt sich eine deutliche Reduzierung der Staubneigung, so daß dieses Dichtungsmaterial nunmehr für eine händische oder auch maschinelle Fertigung geeignet ist, wobei gleichzeitig auch die Einsatzfähigkeit als Abdichtungsmaterial gegeben ist. Als weitere Eigenschaftsverbesserer sind dabei vorteilhafterweise die folgenden Füllstoffe und Mischungen dieser Füllstoffe untereinander geeignet:
Baryt, Kieselsäure, Spat, Basalt, Holzmehl, Kreide, Talkum, Bentonit, Kalk, Magnesiumoxid, Titanoxid, Dolomit, Kalziumcarbonat, Ruß, Zinkweiß, Gips, Kaolin, Sand, Glimmer, Kieselgur oder Silikate. Besonders bevorzugt eignen sich Gummifeinmehle mit der dem Fachmann bekannten Zusammensetzung (z.B. EPDM, NBR, siehe Georg Thieme Verlag Stuttgart, New York, 1992) sowie deren Mischungen.

Die Zusatzstoffe können im Mischungsbereich von 0 bis 95 Gew.-% zugegeben werden, wobei vorzugsweise ein Bereich von 5 bis 45 % gewählt werden sollte.

Vorteilhafterweise werden für die Polymere und die Füllstoffe zur Herstellung des Polymercompounds jeweils gleiche Korngrößenbereiche verwendet.

Werden an das Abdichtungsmittel weitergehende Anforderungen gestellt, können weitere Zusatzstoffe wie beispielsweise Biozide (z.B. Alkyltrimethylammoniumchlorid, Dialkyldimethylammoniumchlorid, Dimethyldistearylammoniumchlorid, Alkylbenzyldimethylammoniumchlorid, Methosulfat, Talgfettimidazoliniummethosulfat) und/oder Korrosionsinhibitoren (z.B. Harnstoff) in geeigneten Konzentrationen, vorzugsweise im Bereich von 0 bis 25 Gew.-% zugegeben werden.

Zur einfachen Anwendung der beschriebenen Abdichtungstechnologie hat sich vorzugsweise die Kapselung des Abdichtmaterials in Form eines elastischen Gewebeschlauchs erwiesen, der für den Einsatz in der beschriebenen Abdichtungskonzeption speziell angepaßt werden kann. Durchmesser und Länge des Schlauchs sind beliebig einstellbar. Für den Einsatz z.B. zur Abdichtung einer Rohrdurchführung in Mauerwerk haben sich Durchmesserabmaße von 10 bis 50 mm und Längenabmaße von 100 bis 1500 mm bewährt. Als Schlauchmaterial können synthetische oder natürliche Garne oder Mischungen derselben in texturierter oder untexturierter Form verwendet werden. Die Elastizität des Gewebes kann durch rein mechanische Eigenschaften (Fertigungstechnik) oder durch elastische Zusatzgarne (z.B. Elastan) erzielt werden. Zur ausreichenden Rückhaltung des Abdichtmaterials in trockenem Zustand kann eine definierte Maschenweite des Materials verwendet werden. Die Maschenweite sollte im trockenen Zustand 0,1 mm bis 1 mm und bei aufgequollenem Dichtungsmaterial 0,5 mm bis 4 mm betragen. Diese kann durch den Einsatz von Garnstärken im Bereich von 5 bis 300 dtx, vorzugsweise von 20 bis 200 dtx erzielt werden. Der Gewebeschlauch kann nach Auffüllung des Abdichtmittels nach den bekannten Methoden der Technik (z.B. Ultraschallschweißung, Impulsschweißung, Verklebung, Nähen) an den Enden verschlossen werden.

Das quellfähige Polymer kann dann auch in Form eines Wickelelementes ein- oder mehrfach um ein Rohr gewikkelt werden.

Bei der erfindungsgemäßen Abdichtung wird eine Öffnung, beispielsweise ein Mauerdurchbruch oder Hausanschluß, unter Einsatz des erfindungsgemäßen Dichtmaterials abgedichtet. Vorteilhaft daran ist, daß die Dichtung bei anstehender Feuchtigkeit (sowohl von innen nach außen als auch von außen nach innen) zusätzlich aktiviert wird, aufquillt und in kurzer Zeit ohne negative Beeinflussung des Rohrmaterials oder des Mauerwerks den Anschluß dauerhaft abdichtet. Insbesondere ist diese Dichtung auch in der Lage, später entstehende Setzrisse oder ähnliches selbständig wieder zu verschließen, ohne daß eine Nachdichtung erforderlich wäre.

Dabei kommt insbesondere zum Tragen, daß die quellfähigen Polymere immer dann aufquellen, wenn tatsächlich Wasser ansteht, so daß sie genau in den Situationen aktiviert werden, in denen sie ihre Dichtwirkung entfalten sollen.

Die Abdichtung kann verbessert werden, indem die durch den Durchbruch geführte Leitung kraftschlüssig an den Gegenstand, beispielsweise mittels Polyurethanschaum, Beton oder durch Verschraubung fixiert wird. Denn die quellfähigen Polymere können Zugkräfte auf die Leitung nur in geringem Maße aufnehmen, so daß sich die Position der Leitungen zu der durchbrochenen Mauer verschieben kann und die Dichtwirkung beeinträchtigt werden kann. Andererseits sind Polyurethanschaum, Beton oder Verschraubungen, wie oben beim Stand der Technik erläutert, nicht fähig, in jeder Situation eine wartungsfreie zuverlässige Abdichtung zu gewährleisten. Durch die Kombination der kraftschlüssigen Fixierung, z.B. mittels Polyurethanschaum, Beton oder durch Verschraubung, mit einem quellfähigen Polymer als abdichtende Masse werden die Vorteile beider Systeme optimal verbunden.

Als quellbares Material wird vorzugsweise eine Kombination von hochsaugaktivem synthetischen Polymer, ausgewählt aus Polymeren auf (Meth)acrylatbasis, Poly(meth)acrylsäure und deren Salzen, Polyacrylamid, Polyalkoholen und Copolymeren der genannten synthetischen Polymeren oder Mischungen derselben mit Polysaccharid(en) ausgewählt aus Alginaten, Alginsäure, Amylose, Amylopektin, Callose, Carragenan, Cellulose, Chitin, Dextran, Guluronsäure, Inulin, Laminarin, Lichenin, Pullulan, Pustulan, Stärke, Stärkederivaten, Xanthan und weiteren Vernetzungs- und Verarbeitungshilfsmitteln eingesetzt.

Die erfindungsgemäß eingesetzten quellfähigen Polymere können weiterhin vorteilhafterweise aus mindestens einem Monomer eines Acrylamides, eines Acrylates, eines Urethans oder deren Derivaten hergestellt werden. Günstig ist es, ein solches Monomer als Basismonomer in Verbindung mit einem geeigneten Vernetzungsmonomer zu verwenden. Die Eigenschaften eines solchen Polymers können zusätzlich durch Verwendung eines weiteren Co-Monomers gezielt beeinflußt werden.

Diese Polymere können mit herkömmlichen Herstellungsverfahren, wie sie zum Beispiel von A. Echte im "Handbuch der technischen Polymerchemie"; VCH-Verlagsgeselischaft mbH, Weinheim, 1993, oder in "Modern Superabsorbent Polymer Technology", F.L. Buchholz, A.T. Graham, Verlag Wiley-VCH, 1998, beschrieben worden sind, erhalten werden. Substanzen, die prinzipiell nach diesen Methoden hergestellt werden können, sind in Tabelle 1 beispielhaft aufgelistet. Daneben können auch kommerziell verfügbare Superabsorber eingesetzt werden, wie sie z.B. in "Modern Superabsorbent Polymer Technology", F.L. Buchholz, A.T. Graham, Verlag Wiley-VCH, 1998, Seite 19, beschrieben werden.

Biologische Nichtabbaubarkeit der quellfähigen Polymere ist insbesondere bei anstehendem und/oder drükkendem Grund- oder Oberflächenwasser vorteilhaft, da dadurch auch eine langfristige Nutzung und Instandhaltung der erfindungsgemäßen Abdichtung ermöglicht wird.

Die erfindungsgemäße Abdichtung kann in redundanter Form in Verbindung mit konventionellen Dichtungen als zusätzliche inhärent vorhandene Sicherheitsdichtung eingesetzt werden.

Die quellfähigen Polymere können auch in einem biologisch abbaubaren Schlauch (z.B. Papierschlauch) eingebracht und montiert werden. Nach Auflösung und Zerstörung des Schlauchmaterials, beispielsweise beim Einbauvorgang oder beim Eindringen von anstehendem Grund- oder Oberflächenwasser steht das Polymerpulver dann unmittelbar zur Abdichtung zur Verfügung. Neben der biologisch abbaubaren Kapselung kann eine solche, aus einem in einer Flüssigkeit löslichen Material verwendet werden wie dies z.B. bei Stärke oder Stärke enthaltenden Materialien der Fall ist. Eine weitere Möglichkeit besteht darin, das Polymer an Fasern zu applizieren, so daß ein entsprechend mit Polymer behaftetes Gewebe, Gewirk oder Vlies als Dichtung eingesetzt werden kann.

Vorteilhaft bei der erfindungsgemäßen Abdichtung ist, daß der beim Quellen des Polymers auftretende Quelldruck die durchgeführten Leitungen bzw. die Materialien dieser Leitungen nicht beeinträchtigt, aber dennoch ausreicht, eine dauerhafte und stabile Abdichtung zu gewährleisten.

Im folgenden werden einige vorteilhafte Ausführungsformen der erfindungsgemäßen Abdichtung beschrieben.

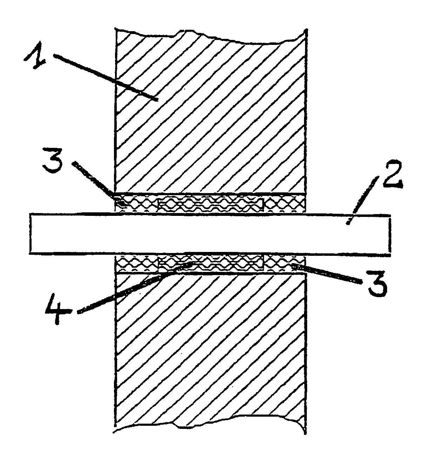

Es zeigen die Figuren 1 bis 10 verschiedene Ausführungsformen der erfindungsgemäßen Abdichtung.

Figur 1 zeigt den Aufbau eines erfindungsgemäßen Dichtungssystems mit einer Sperrschicht aus Polyurethanschaum. In einem Mauerwerk 1 ist eine Rohrdurchführung 2 eingebracht, die sich zwischen den beiden Seiten des Mauerwerkes 1 erstreckt. Zwischen der Rohrdurchführung 2, beispielsweise für einen Gasanschluß oder eine Wasserzuleitung oder -ableitung, und dem Mauerwerk 1 ist mittig im Mauerwerk ein erfindungsgemaßes Dichtungsmaterial 4 eingebracht, das die Öffnung zwischen der Rohrdurchführung 2 und dem Mauerwerk 1 etwa auf der Hälfte der Länge der Öffnung im Mauerwerk 1 ausfüllt, wobei das Dichtungsmaterial 4 die Rohrdurchführung 2 längs des Querschnitts der Öffnung zwischen der Rohrdurchführung 2 und des Mauerwerkes 1 vollständig umgibt. Auf den beiden Seiten des Mauerwerks 1 ist die Öffnung zwischen der Rohrdurchführung 2 und dem Mauerwerk 1 mittels Polyurethanschaum 3 abgedichtet.

Zum Aufbau der Abdichtung aus Figur 1 erfolgt zunächst eine Fixierung der Rohrdurchführung 2 an dem Mauerwerk 1 durch Polyurethanschaum, der eine Kraftübertragung der Rohrdurchführung 2 auf das Mauerwerk 1 sicherstellt und gleichzeitig auch eine Barriere für Ungeziefer darstellt. Anschließend wird ein Dichtungsmaterial 4 in den verbleibenden, mittleren Bereich des Mauerdurchbruchs eingebracht.

Im folgenden werden bei sämtlichen Figuren für dieselben Elemente dieselben Bezugszeichen verwendet.

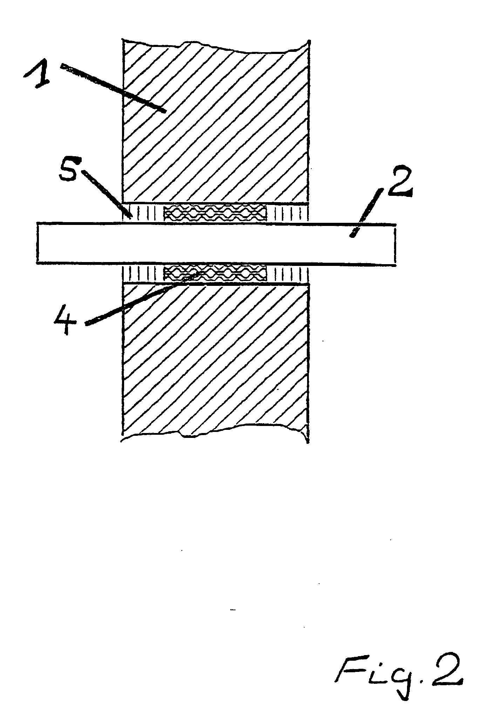

Figur 2 zeigt eine entsprechend aufgebaute Abdichtung.

Die Abdichtung in Figur 2 besitzt denselben Aufbau wie die Abdichtung 1, wobei jedoch statt des Polyurethanschaumes 3 nunmehr eine primäre Dichtung mit Beton 5 zur Fixierung der Rohrdurchführung und als Barriere für Ungeziefer verwendet wird.

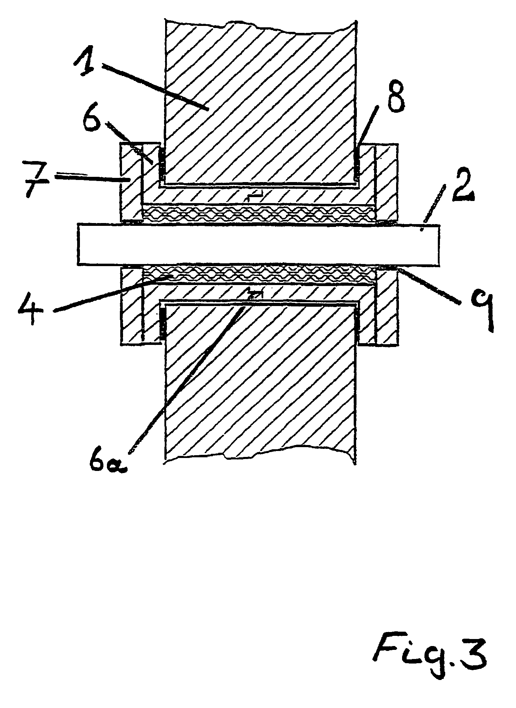

Figur 3 zeigt eine weitere erfindungsgemäße Abdichtung, wobei hier jedoch statt des Polyurethanschaums 3 wie in Figur 1 oder des Betons 5 in Figur 2 eine Verschraubung als primäre Abdichtung verwendet wird. Dabei ist das Mauerwerk 1 längs seines Randes entlang der Öffnung für die Rohrdurchführung 2 mit Verschraubungselementen 6 ausgekleidet. Diese Verschraubungselemente 6 sind von beiden Seiten auf die Öffnung aufgeschoben und etwa mittig zum Durchbruch miteinander verschraubt (Bezugszeichen 6a). Die Verschraubungselemente selbst sind gegenüber der Mauer mittels Dichtungen 8 abgedichtet. Zwischen den Verschraubungselementen 6 und der Rohrdurchführung 2 ist wiederum ein erfindungsgemäßes Dichtungsmaterial eingebracht, das eine zuverlässige Abdichtung zwischen der Rohrdurchführung 2 und den Verschraubungselementen 6 gewährleistet.

Auf den Außenseiten der Durchführungsöffnung sind Abdeckplatten 7 auf die flanschartig ausgebildeten Verschraubungselemente 6 aufgebracht, die die Rohrdurchführung 2 in ihrer Position fixieren und zugleich ein Herausquellen des quellfähigen Dichtungsmaterials 4 verhindern. Diese Abdeckplatten sind aufgeschraubt oder auf die Verschraubungselemente aufgeklebt und ihrerseits mittels pulverdichter Dichtlippen 9 gegenüber der Rohrdurchführung 2 abgedichtet.

Die Applikation des Dichtungsmaterials als Polymer/Geldichtung kann bei den obigen Ausführungsformen gemäß den Figuren 1 bis 3 als durch ein dehnbares poröses Material gekapseltes Pulver oder als ein faserappliziertes Polymer erfolgen. Das Anbringen des Dichtungsmaterials kann entweder in Form einer als Ring gefertigten Dichtung erfolgen oder durch ein Wickelelement, das durch mehrfaches Umwickeln mit einem Polymer/Gelschlauch oder -gewebe angebracht werden kann.

Der Einschluß der Geldichtung, der ein Herausquellen der Geldichtung verhindert, kann wie in Figur 1 durch einen Verschluß aus Polyurethanschaum oder ähnlichen Materialien, wie in Figur 2 durch Beton oder wie in Figur 3 durch eine Verschlußplatte oder durch einen Schraubverschluß realisiert werden.

Das Dichtungsmaterial kann auch als loses Pulver oder als reagierendes 2-Komponenten-Gemisch eingebracht werden, wenn der Mauerdurchbruch vor der Befüllung mit einer Platte abgeschlossen wird.

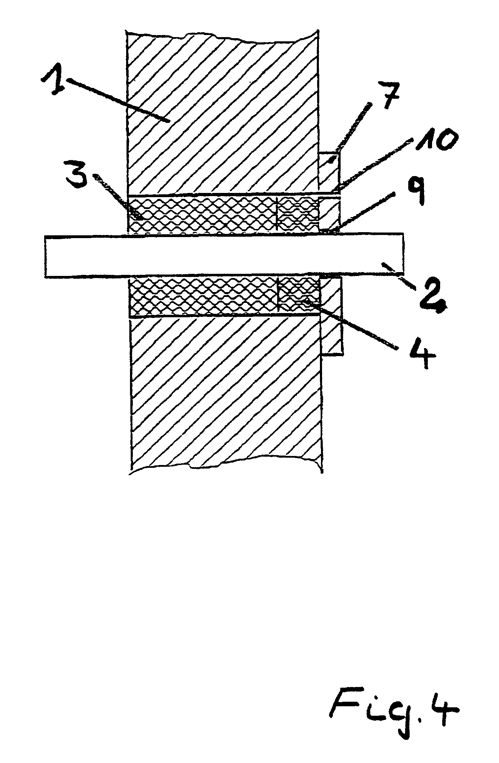

Ein solches Beispiel zeigt Figur 4, bei der in einem Mauerwerk 1 eine Rohrdurchführung 2 angeordnet ist, wobei die Rohrdurchführung 2 längs ihres Querschnitts an dem Mauerwerk 1 mittels Polyurethanschaum 3 fixiert ist. Die Polyurethanschaumfüllung 3 dichtet dabei die Öffnung im Mauerwerk auf einer Seite ab, während die andere Seite der Öffnung mittels einer verschraubten oder verklebten Abdeckplatte 7 verschlossen ist. Zwischen der Rohrdurchführung 2 und der Abdeckplatte 7 befindet sich eine pulverdichte und flüssigkeitsdichte Dichtlippe 9. In der Abdeckplatte 7 befindet sich eine Befüllöffnung 10, die den zwischen der auf der einen Seite der Öffnung angeordneten Polyurethanfüllung und der auf der anderen Seite der Öffnung angeordneten Abdeckplatte in der Öffnung verbleibenden Hohlraum zugänglich macht. Durch diese Befüllöffnung 10 wird in den verbleibenden Hohlraum ein erfindungsgemäßes quellfähiges Dichtmaterial 4 eingebracht. Dabei kann ein 2-Komponenten-Gemisch eingebracht werden, das ein Basispolymer und einem Co-Polymer enthält, wie sie in Tabelle 1 beschrieben sind. Das Basispolymer und das Co-Polymer reagieren innerhalb des Hohlraumes miteinander und bilden ein quellfähiges Polymer 4 aus.

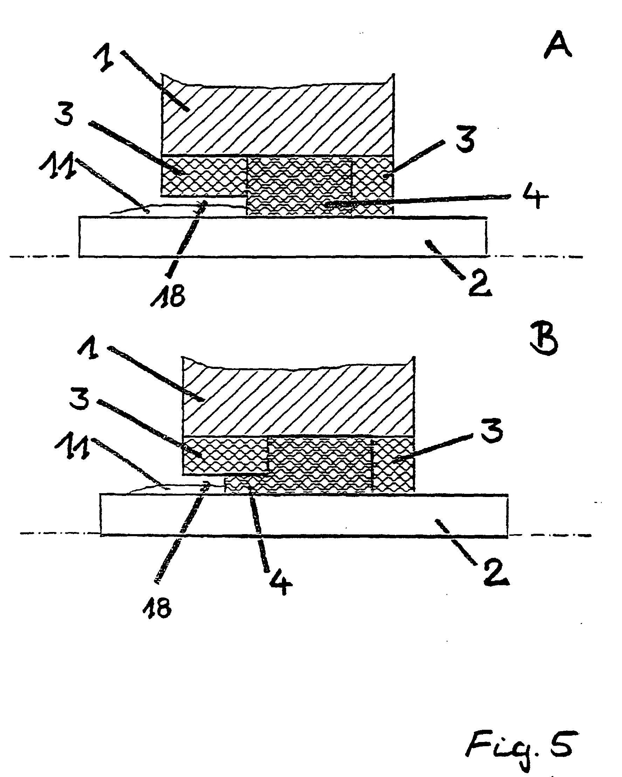

Figur 5 zeigt das Funktionsprinzip einer erfindungsgemäßen Abdichtung für einen Mauerdurchbruch, wobei nunmehr lediglich eine Hälfte des Mauerdurchbruches dargestellt ist. Figur 5 stellt dabei eine Abdichtung dar, wie sie in Figur 1 gezeigt ist, d.h. daß die beiden Enden der Öffnung in dem Mauerwerk 1 zwischen der Rohrdurchführung 2 und dem Mauerwerk 1 mittels Polyurethanschaum verschlossen sind, während in die Mitte zwischen den Polyurethanverschlüssen ein quellfähiges Dichtmaterial 4 eingebracht ist.

Figur 5A zeigt nunmehr den Fall, daß sich auf einer Seite der Öffnung zwischen dem Polyurethanschaum 3 und der Rohrdurchführung 2 eine Spalte 18 gebildet hat. Durch diese Spalte 18 kann anstehendes Grundwasser 11 in die Mauerdurchführung eindringen.

Derartige Spalten bilden sich bei herkömmlichen Abdichtungen mit starren Materialien, wie beispielsweise Polyurethanschaum oder Beton, beispielsweise durch Setzungen des Gebäudes. Dringt das anstehende Grundwasser 11 in den Spalt 18 ein, so quillt, wie in Figur 5B gezeigt, das quellfähige Dichtmaterial 4 sofort auf und dehnt sich unter Wassereinlagerung zur sofortigen Quellung in den Spalt 18 aus. Dadurch wird der Spalt verschlossen und die eingedrungene Feuchtigkeit kann nicht weiter in die Öffnung eindringen. Eine mechanische Beeinträchtigung der Rohrdurchführung 2 ist dabei ausgeschlossen. Die biologische Resistenz des quellfähigen Dichtmaterials gewährleistet dabei eine dauerhafte Abdichtung des Mauerdurchbruchs.

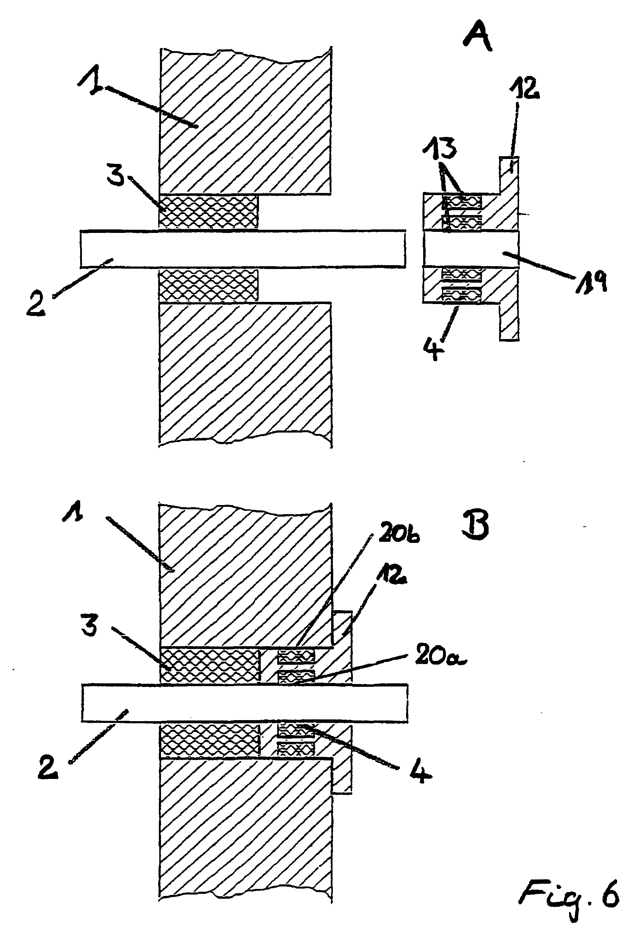

Figur 6 zeigt eine weitere erfindungsgemäße Abdichtung. Dabei ist auf einer Seite der Öffnung im Mauerwerk die Rohrdurchführung 2 an dem Mauerwerk 1 mittels Polyurethanschaums 3 fixiert. Auf die andere Seite der Öffnung im Mauerwerk 1 wird ein Dichtelement 2 aufgeschoben, dessen Außenumfang dem Durchmesser der Öffnung entspricht und das eine Öffnung 19 aufweist, die im applizierten Zustand die Rohrdurchführung 2 aufnimmt. Dadurch entstehen zwischen der Rohrdurchführung 2 und dem Dichtelement 12 abzudichtende Stellen 20a sowie zwischen dem Dichtelement 12 und dem Mauerwerk 1 abzudichtende Stellen 20b. Daher wird in diesen Bereichen in das Dichtelement 12 ein quellfähiges Dichtmaterial 4 in den späteren Abdichtungsstellen 20a und 20b entsprechenden Hohlräumen eingelagert. Diese Hohlräume, die das quellfähige Dichtmaterial 4 enthalten, sind gekapselt und weisen Sollbruchstellen 13 auf. Beim Einbau des Dichtringes 12 in den Mauerdurchbruch werden die Sollbruchstellen 13 mechanisch aufgebrochen und die Sicherheitsdichtung in Form des quellfähigen Dichtmaterials 4 aktiviert. Dringt nun Wasser bis zum quellfähigen Dichtmaterial vor, nimmt dieses die Flüssigkeit unter Volumenvergrößerung auf und dichtet dadurch den Durchbruch dauerhaft ab.

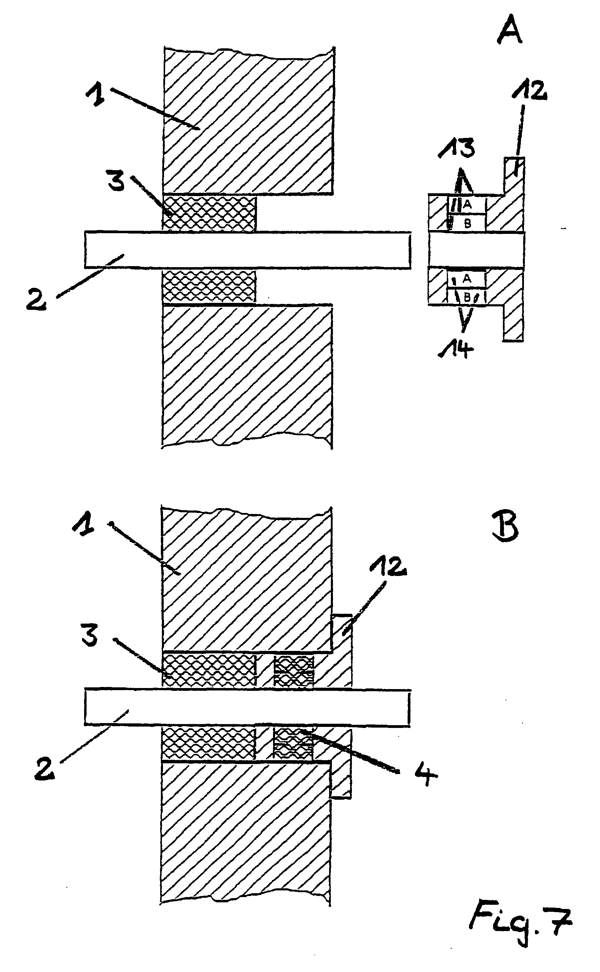

Figur 7 stellt eine ähnliche Abdichtung dar wie in Figur 6, wobei jedoch in diesem Falle zur Erzeugung des quellfähigen Polymers ein 2-Komponenten-Reaktionssystem verwendet wird. In diesem Falle sind in das Dichtungselement 12 in zwei gekammerten Hohlräumen 14 getrennt voneinander die beiden Reaktionskomponenten A und B eingebracht. Die Hohlräume weisen wiederum Sollbruchstellen 13 auf. Wird nun das Dichtungselement 12 in den Durchführungsspalt eingebaut, so werden die Sollbruchstellen 13 mechanisch aufgebrochen und die beiden Komponenten A und B reagieren miteinander zu einem quellfähigen Polymer. Dieses Polymer steht dann sowohl mit der Rohrdurchführung 2 als auch mit dem Mauerwerk 1 in unmittelbarem Kontakt. Dadurch wird eine vollständige Abdichtung der Öffnung zwischen dem Mauerwerk 1 und der Rohrdurchführung 2 durch das quellfähige Polymer erzielt. Figur 7A zeigt dabei das Dichtelement 12 vor dem Einbau, während Figur 7B das Dichtelement nach dem Einbau zeigt, wobei die Sollbruchstellen durchbrochen sind und sich das quellfähige Polymer ausgebildet hat.

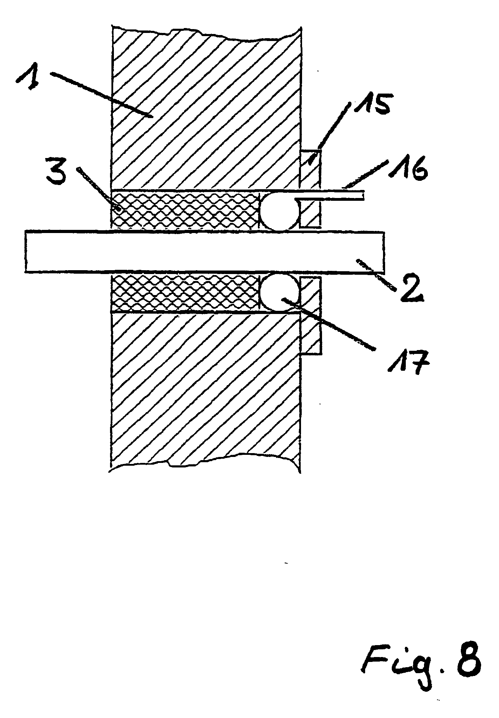

Figur 8 zeigt eine weitere erfindungsgemäße Abdichtung, wobei hier wiederum auf einer Seite der Öffnung zwischen dem Mauerwerk 1 und der Rohrdurchführung 2 die Rohrdurchführung 2 mittels Polyurethanschaum 3 an dem Mauerwerk 1 fixiert ist. Auf der anderen Seite der Öffnung ist ein ringförmiges Aufnahmesystem 17 für das quellfähige Dichtungsmaterial um die Rohrdurchführung 2 in dem Zwischenraum zwischen der Rohrdurchführung 2 und dem Mauerwerk 1 angeordnet. Dieses Aufnahmesystem 17 wird durch eine Abdeckung 15, die auf das Mauerwerk aufgeschraubt oder verklebt sein kann, in ihrer Position gehalten. Das Aufnahmesystem 17 besitzt eine Befüllmöglichkeit 16, die sich durch die Abdeckung 15 erstreckt. In diesem Falle wird nach der Montage der Anordnung aus Mauerwerk 1, Rohrdurchführung 2, Polyurethanschaum 3, Abdichtelement 15 und Aufnahmesystem 17 mit Befüllöffnung 16 in das Aufnahmesystem 17 durch die Befüllöffnung 17 ein erfindungsgemäßes quellfähiges Dichtungsmaterial eingebracht und so das Aufnahmesystem 17 nachträglich befüllt. Die Befüllung kann bis zur vollständigen Ausfüllung des durch das Aufnahmesystem 17 beanspruchten Hohlraumes in der Öffnung erfolgen und so eine vollständige Abdichtung des Mauerdurchbruchs mittels des Dichtmaterials erfolgen.

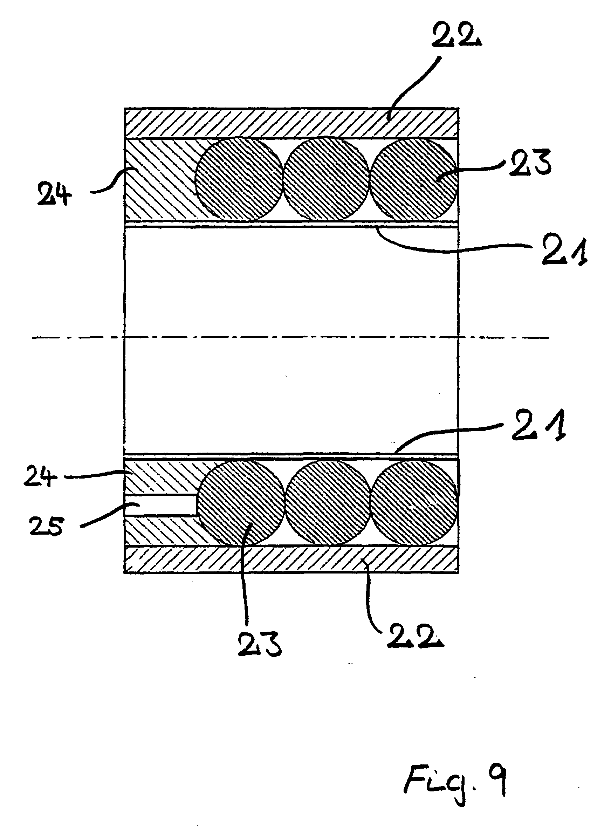

Figur 9 zeigt ebenfalls eine Mauerdurchführung eines Innenrohres 21 durch eine Öffnung in einer Mauer 22. Dasselbe Beispiel ist jedoch auch bei der Ankopplung eines Rohres an ein anderes Rohr für ein Innenrohr 21 und die Muffe 22 eines anderen Rohres zur Erläuterung geeignet.

In Figur 9 ist wiederum nur die linke Hälfte einer Mauerdurchführung dargestellt. Diese ist auf Ihrer Außenseite mittels Polyurethanschaum 24 verschlossen und mechanisch fixiert. Im Innenbereich der Mauerdurchführung ist ein erfindungsgemäßes Dichtungsmaterial, das in einem Schlauch 23 eingeschlossen ist, spiralförmig um das Innenrohr 21 im Zwischenraum zwischen dem Innenrohr 21 und der Mauer 22 gelegt. Dadurch ist das Dichtmaterial bereits gekapselt und kann auf leichte Weise verarbeitet werden. Der Verschluß 24 mit Polyurethanschaum weist weiterhin eine Öffnung 25 auf, mit der eine definierte Leckage zwischen dem Außenraum und dem Dichtungsmaterial hergestellt wird.

Diese definierte Leckage wird nun in einem Versuchsaufbau dazu verwendet, um definierte Mengen Flüssigkeit im Dichtungsmaterial zuzuführen.

Das Abdichtungsmaterial besteht dabei aus einem quellfähigen Polymer und einem Gummifeinmehl. Das quellfähige Polymer wurde nach herkömmlichen Herstellungsverfahren aus einer zu 70 % mit NaOH teilneutralisierten Acrylsäure synthetisiert und bis in den Korngrößenbereich von 100 bis 400 µm vermahlen. Weiterhin wurde ein EPDM-Elastomer bis in den Korngrößenbereich von 100 bis 400 µm vermahlen, um das Gummifeinmehl zu erhalten. Das Abdichtmittel wurde nunmehr durch Mischung von einem derartigen Polymer mit dem Gummifeinmehl im Verhältnis 80:20 erhalten. Das so erzeugte Abdichtmaterial ist nahezu staubfrei und kann problemlos verarbeitet werden.

Für das Beispiel in Figur 9 wurde dieses Dichtungsmaterial in einen Polyamidgewebeschlauch mit einem Durchmesser von 20 mm und einer Länge von 800 mm eingefüllt. Der Schlauch wurde durch Ultraschallverschweißung an den Enden verschlossen. Der so erhaltene Schlauch wurde in die Öffnung zwischen einem Innenrohr und einem Außenrohr eingebracht, um den Ringspalt zu verschließen. Anschließend wurde die in Figur 9 dargestellte Leckage 25 mit Wasser unter einem Druck von 0,1 bar beaufschlagt. Nach vier Wochen wurde auch bei Beaufschlagung von insgesamt 10 Temperaturwechseln zwischen -20 °C und 90 °C keine Undichtigkeit des Systems zur anderen Seite beobachtet.

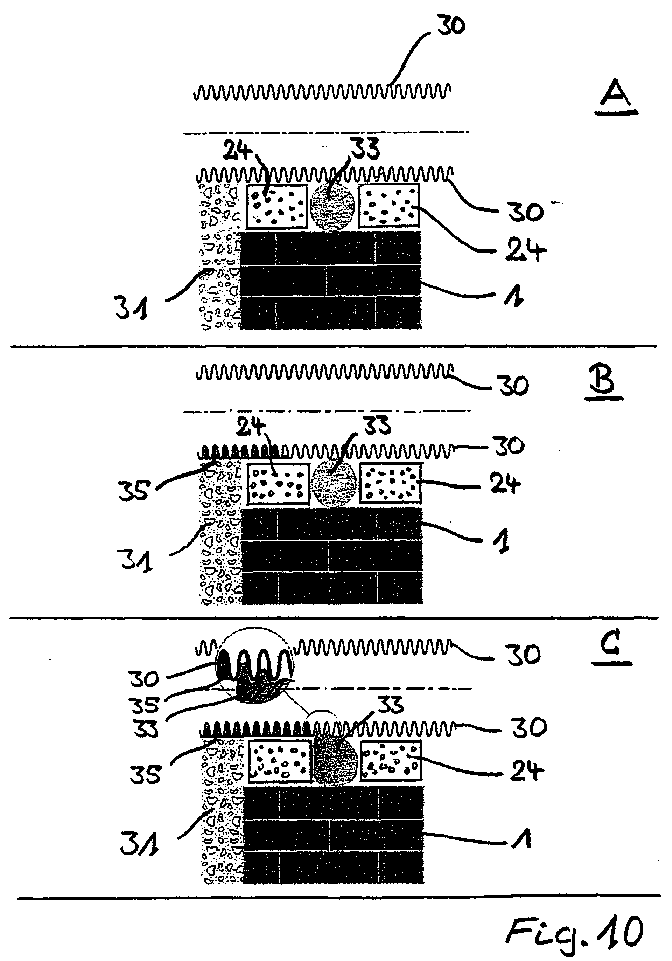

Figur 10 zeigt das Quellverhalten der Abdichtung einer derartigen Rohrdurchführung durch einen Mauerdurchbruch. In Figur 10A ist lediglich eine Seite eines Mauerdurchbruches dargestellt, der sich entlang der strichpunktierten Linie rotationssymmetrisch erstreckt.

Durch den Mauerdurchbruch der Mauer 1 führt ein Polyethylen-Wellrohr 30 und bildet mit der Mauer 1 einen Ringspalt. Dieser Ringspalt ist auf der Außenseite und der Innenseite der Mauer 1 mit Polyurethanschaum 24 verschlossen. In der Mitte des Ringspaltes befindet sich ein Schlauch 33 mit einem erfindungsgemäßen Dichtmaterial. Auf der Außenseite der Mauer 1 liegt an den Ringspalt Erdreich 31 an, so daß dort Grundwasser an die Dichtung anstehen kann.

In Figur 10B ist dargestellt, wie Grund- bzw. Oberflächenwasser 35 entlang des Wellrohres 30 aus dem Erdreich 31 in die Dichtung des Ringspaltes eindringt.

In Figur 10C ist dargestellt, daß beim Erreichen des quellfähigen Materiales des Schlauches 33 das Dichtungsmaterial und der Schlauch 33 aufquellen und sich bis in die einzelnen Vertiefungen des Wellrohres 30 ausdehnen. Dadurch wird nun ein hervorragender Verschluß des Ringspaltes erreicht, so daß kein weiteres Grund- oder Oberflächenwasser 35 über das Dichtungsmaterial und den Schlauch 33 hinaus in Richtung der Innenseite der Mauer 1 dringen kann.

In Figur 10C ist als Einschub die Verzahnung zwischen dem Schlauch mit Dichtmaterial 33 und dem Wellrohr 30 dargestellt. Es ist zu erkennen, daß eine enge Verzahnung stattfindet und dadurch ein optimaler Verschluß des Ringspaltes zwischen Wellrohr 30 und Mauer 1 erzielt wird.

**Tabelle 1**

| BM: Basispolymer | CM: Copolymer |
|---|---|
| BM | **Acrylamid** |
| CM | 2-(Acryloyloxyl)ethylsäurephosphat |
| | 2-Acrylamido-2-methylpropansulfonsäure |
| | 2-Dimethylaminoethylacrylat |
| | 2,2'-Bis(acrylamido)essigsäure |
| | 3-(Methacrylamido)propyltrimethylammoniumchlorid |
| | Acrylamidomethylpropandimethylammoniumchlorid |
| | Acrylate |
| | Acrylonitril |
| | Acrylsäure |
| | Diallyldimethylammoniumchlorid |
| | Diallylammoniumchlorid |
| | Dimethylaminoethylacrylat |
| | Dimethylaminoethylmethacrylat |
| | Ethylenglykoldimethacrylat |
| | Ethylenglykolmonomethacrylat |
| | Methacrylamid |
| | Methylacrylamidopropyltrimethylammoniumchlorid |
| | N,N-Dimethylacrylamid |
| | N-[2[[[5-(Dimethylamino)1-naphthalenyl]-sulfonyl]-amino]- |
| | ethyl]-2-acrylamid |
| | N-[3-(Dimethylamino)propyl]acrylamidhydrochlorid |
| | N-[3-(Dimethylamino)propyl]methacrylamidhydrochlorid |
| BM | **Poly(diallyldimethylammoniumchlorid)** |
| CM | Natrium 2-(2-Carboxylbenzoyloxy)ethylmethacrylat |
| | Natriumacrylat |
| | Natriumallylacetat |
| | Natriummethacrylat |
| | Natriumstyrolsulfonat |
| | Natriumvinylacetat |
| | Triallylamin |
| | Trimethyl(N-Acryloyl-3-aminopropyl)ammoniumchlorid |
| | Triphenylmethan-leuco-derivate |
| | Vinyl-terminated-polymethysiloxan |
| BM | **N-(2-Ethoxyethyl)acrylamid)** |
| BM | **N-3-(Methoxypropyl)acrylamid** |
| BM | **N-(3-Ethoxypropyl)acrylamid** |
| BM | **N-Cyclopropylacrylamid** |
| BM | **N-n-Propylacrylamid** |
| BM | **N-(Tetrahydrofurfuryl)acrylamid** |
| BM | **N-Isopropylacrylamid** |
| CM | 2-(Diethylamino)ethylmethacrylat |
| | 2-(Dimethylamino)ethylmethacrylat |
| | 2-Acrylamido-2-methyl-1-propanesulfonacrylat |
| | Acrylsäure |
| | Acrylamid |
| | Alkylmethacrylat |
| | Bis(4-dimethylamino)phenyl)(4-vinylphenyl)methyl- |
| | leucocyanid |
| | Concanavalin A (Lecitin) |
| | Hexylmethacrylat |
| | Laurylmethacrylat |
| | Methacrylsäure |
| | Methyacrylamidopropyltrimethylammoniumchlorid |
| | n-Butylmethacrylat |
| | Poly(tetrafluoroethylen) |
| | Polytetramethylenetherglykol |
| | Natriumacrylat |
| | Natriummethacrylat |
| | Natriumvinylsulfonat |
| | Vinyl-terminated-polymethysiloxan |
| BM | **N,N'-Diethylacrylamid** |
| CM | Methyacrylamidopropyltrimethylammoniumchlorid |
| | N-Acryloxysuccinimidester |
| | N-tert.-Butylacrylamid |
| | Natriummethacrylat |
| BM | **2-Dimethylaminoethylacrylat** |
| CM | 2-Acrylamido-2-methylpropansulfonsäure |
| | Acrylamid |
| | Triallylamin |
| BM | **Acrylat** |
| CM | Acrylamid |
| BM | **Methylmethacrylat** |
| CM | Divinylbenzen |
| | N,N-Dimethylaminoethylmethacrylat |
| | Poly(oxytetramethylendimethacrylat) |
| BM | **Poly(2-hyroxyethylmethacrylat)** |
| BM | **Poly(2-hydroxipropylmethacrylat)** |
| BM | **Polyethylenglykolmethacrylat** |
| BM | **Acrylsäure, teilneutralisierte Acrylsäure (Neutralisationsmittel KOH oder NaOH)** |
| CM | Methacrylomidopropyltrimethylammoniumchlorid |
| BM | **Collagen** |
| BM | **Dipaimitoylphosphatidylethanolamin** |
| BM | **Poly-[4,6-decadien-1,10-diol-bis(n-butoxy- carbonylmethylurethan)]** |
| BM | **Poly-[bis[aminoethoxy)ethoxy]phosphazen]** |
| BM | **Poly-[bis[(butoxyethoxy)-ethoxy]phosphazen]** |
| BM | **Poly-[bis[(ethoxyethoxy)-ethoxy]phosphazen]** |
| BM | **Poly-[bis[(methoxyethoxy)-ethoxy]phosphazen]** |
| BM | **Poly-[bis(methoxyethoxy)phosphazen]** |
| BM | **Polydimethylsiloxan** |
| BM | **Polyethylenoxid** |
| BM | **Poly(ethylen-dimethylsiloxan-ethylenoxid)** |
| BM | **Poly(N-acrylopyrrolidin)** |
| BM | **Poly-[n,n-dimethyl-N-[(methacryloyloxy)-ethyl]- N-(3-sulfopropyl)-ammonium betain]** |
| BM | **Polymethacrylsäure** |
| BM | **Polymethacryloyldipeptide** |
| BM | **Polyvinylalkohol** |
| BM | **Polyvinylalkohol-vinylacetat** |
| BM | **Polyvinylmethylether** |
| BM | **Furan modifiziertes Poly(n-acetylethylenimin)** |
| CM | Maleinimid modifiziertes Poly(n-acetylethylenimin) |
| | |
| Vernetzermonomere | |
| **N,N'-Methylenbiscacrylamid** | |
| **Diallylamin** | |
| **Diallylammoniumchlorid** | |
| **Triallylamind** | |
| **Triallylammoniumchlorid** | |
| **Diallylweinsäurediamid** | |
| | |
| Fertigprodukte | |
| **allg.** | **Natriumpolyacrylate** |
| | **Kaliumpolyacrylate** |
| | **Acrylatharze** |
| | **Acrylharze** |

## Patentansprüche

1. Dichtungsmaterial enthaltend ein quellfähiges Polymer und Füllstoffe
**dadurch gekennzeichnet, daß**
es als Füllstoff zumindest teilweise Gummifeinmehl enthält und
die Polymere und die Füllstoffe im Wesentlichen eine Korngröße zwischen 5 µm und 800 µm aufweisen.

2. Dichtungsmaterial nach dem vorhergehenden Anspruch, **dadurch gekennzeichnet, daß** es als Füllstoffe zumindest teilweise Gummimehl, Baryt, Kieselsäure, Spat, Basalt, Holzmehl, Kreide, Talkum, Bentonit, Kalk, Magnesiumoxid, Titanoxid, Dolomit, Kalziumcarbonat, Ruß, Zinkweiß, Gips, Kaolin, Sand, Glimmer, Kieselgur oder Mischungen hiervon enthält.

3. Dichtungsmaterial nach einem der vorhergehenden Ansprüche, **dadurch gekennzeichnet, daß** die Polymere und/oder die Füllstoffe im wesentlichen eine Korngröße zwischen 100 und 400 µm aufweisen.

4. Dichtungsmaterial nach einem der vorhergehenden Ansprüche, **dadurch gekennzeichnet, daß** die Polymere und die Füllstoffe weitgehend gleiche Korngrößen aufweisen.

5. Dichtungsmaterial nach einem der vorhergehenden Ansprüche, **dadurch gekennzeichnet, daß** es die Füllstoffe in einer Konzentration bis zu 95 Gew.-% enthält.

6. Dichtungsmaterial nach einem der vorhergehenden Ansprüche, **dadurch gekennzeichnet, daß** es die Füllstoffe in einer Konzentration zwischen 5 Gew.-% und 45 Gew.-% enthält.

7. Dichtungsmaterial nach einem der vorhergehenden Ansprüche, **dadurch gekennzeichnet, daß** es als quellbares Material zumindest teilweise ein hochsaugaktives synthetisches Polymer enthält.

8. Dichtungsmaterial nach einem der vorhergehenden Ansprüche, **dadurch gekennzeichnet, daß** es als quellbares Material zumindest teilweise ein hochsaugaktives synthetisches Polymer ausgewählt aus Acrylaten, Methacrylaten, Polyacrylsäure und deren Salzen, Polymethacrylsäure und deren Salzen, Polyacrylamid, Polyalkoholen sowie Copolymeren und/oder Mischungen der genannten Polymeren mit Polysacchariden enthält.

9. Dichtungsmaterial nach einem der vorhergehenden Ansprüche, **dadurch gekennzeichnet, daß** es Copolymere und/oder Mischungen des synthetischen quellbaren Materials mit Polysacchariden ausgewählt aus Alginaten, Alginsäure, Amylose, Amylopektin, Callose, Carragenan, Cellulose, Chitin, Dextran, Guluronsäure, Inulin, Laminarin, Lichenin, Pullulan, Pustulan, Stärke, Stärkederivaten und/oder Xanthan enthält.

10. Dichtungsmaterial nach einem der vorhergehenden Ansprüche, **dadurch gekennzeichnet, daß** *es* Vernetzungshilfsmittel und/oder Verarbeitungshilfsmittel enthält.

11. Dichtungsmaterial nach einem der vorhergehenden Ansprüche, **dadurch gekennzeichnet, daß** es Biozide und/oder Korrosionsinhibitoren enthält.

12. Dichtungsmaterial nach dem vorhergehenden Anspruch, **dadurch gekennzeichnet, daß** es als Biozide Alkyltrimethylammoniumchlorid, Dialkyldimethylammoniumchlorid, Dimethyldistearylammoniumchlorid, Alkylbenzyldimethylammoniumchlorid, Methosulfat und/oder Talgfettimidazoliniummethosulfat enthält.

13. Dichtungsmaterial nach einem der beiden vorhergehenden Ansprüche, **dadurch gekennzeichnet, daß** es ein Biozid in einer Konzentration bis 25 Gew.-% enthält.

14. Dichtungsmaterial nach einem der drei vorhergehenden Ansprüche, **dadurch gekennzeichnet, daß** es als Korrosionsinhibitor Harnstofff enthält.

15. Dichtungsmaterial nach einem der vier vorhergehenden Ansprüche, **dadurch gekennzeichnet, daß** es Korrosionsinhibitoren in einer Konzentration bis 25 Gew.-% enthält.

16. Dichtungsmaterial nach einem der vorhergehenden Ansprüche, **dadurch gekennzeichnet, daß** es in einem elastischen Gewebeschlauch eingeschlossen ist.

17. Dichtungsmaterial nach dem vorhergehenden Anspruch, **dadurch gekennzeichnet, daß** der Gewebeschlauch einen Durchmesser zwischen 10 mm und 50 mm aufweist.

18. Dichtungsmaterial nach einem der beiden vorhergehenden Ansprüche, **dadurch gekennzeichnet, daß** der Gewebeschlauch eine Länge zwischen 100 mm und 1500 mm aufweist.

19. Dichtungsmaterial nach einem der drei vorhergehenden Ansprüche, **dadurch gekennzeichnet, daß** der Gewebeschlauch zumindest teilweise aus synthetischen Garnen, natürlichen Garnen und/oder Mischungen hiervon besteht.

20. Dichtungsmaterial nach dem vorhergehenden Anspruch, **dadurch gekennzeichnet, daß** der Schlauch zumindest teilweise aus Garnen mit einer Garnstärke zwischen 5 dtx und 300 dtx besteht.

21. Dichtungsmaterial nach dem vorhergehenden Anspruch, **dadurch gekennzeichnet, daß** der Schlauch zumindest teilweise aus Garnen mit einer Garnstärke zwischen 20 dtx und 200 dtx besteht.

22. Dichtungsmaterial nach einem der sechs vorhergehenden Ansprüche, **dadurch gekennzeichnet, daß** der Schlauch ein elastisches Zusatzgarn enthält.

23. Dichtungsmaterial nach dem vorhergehenden Anspruch, **dadurch gekennzeichnet, daß** der Schlauch als elastisches Zusatzgarn Elastan enthält.

24. Abdichtung zwischen einer ersten Wand und einer zweiten Wand gegen anstehendes Wasser, wobei in dem Raum der Öffnung zwischen den beiden Wänden zumindest teilweise längs des Querschnitts der Öffnung ein Dichtungsmaterial eingebracht ist, **gekennzeichnet durch**
ein Dichtungsmaterial nach einem der vorhergehenden Ansprüche.

25. Abdichtung nach dem vorhergehenden Anspruch, **dadurch gekennzeichnet, daß** die erste Wand von einer Leitung (2) wie Hausanschlüssen, elektrischen Leitungen, Rohrleitungen (2) oder dergleichen und die zweite Wand von einer Öffnung in einem Gegenstand (1) wie einer Mauerdurchführung oder einem Kabelverschlußkasten, einer Muffe für Kabeldurchführungen oder dergleichen, durch die die Leitung geführt wird, gebildet werden.

26. Abdichtung nach dem vorhergehenden Anspruch, **dadurch gekennzeichnet, daß** die Leitung (2) kraftschlüssig an dem Gegenstand (1) fixiert ist.

27. Abdichtung nach dem vorhergehenden Anspruch, **dadurch gekennzeichnet, daß** die Leitung (2) im Bereich der Öffnung mit dem Gegenstand (1) durch Polyurethanschaum, Beton oder eine andere aushärtende Masse oder durch Verschraubung kraftschlüssig verbunden ist.

28. Abdichtung nach einem der Ansprüche 24 bis 27, **dadurch gekennzeichnet, daß** das Dichtungsmaterial in der Öffnung eingeschlossen ist.

29. Abdichtung nach dem vorhergehenden Anspruch, **dadurch gekennzeichnet, daß** das Dichtungsmaterial durch einen Verschluß auf einer oder beiden Seiten der Öffnung eingeschlossen ist.

30. Abdichtung nach dem vorhergehenden Anspruch, **dadurch gekennzeichnet, daß** der Verschluß aus Polyurethanschaum, Beton oder einer anderen aushärtenden Masse, einer Verschlußplatte oder einem Schraubverschluß besteht.

31. Abdichtung nach einem der Ansprüche 24 bis 30, **dadurch gekennzeichnet, daß** das Dichtungsmaterial in einem dehnbaren, flüssigkeitsdurchlässigen Material gekapselt ist.

32. Abdichtung nach einem der Ansprüche 24 bis 31, **dadurch gekennzeichnet, daß** das Dichtungsmaterial in einem biologisch abbaubaren und/oder einem in einer Flüssigkeit löslichen Material gekapselt ist.

33. Abdichtung nach einem der Ansprüche 24 bis 32, **dadurch gekennzeichnet, daß** das Dichtungsmaterial von einem Material umschlossen ist, das mindestens eine Sollbruchstelle aufweist.

34. Abdichtung nach einem der Ansprüche 24 bis 33, **dadurch gekennzeichnet, daß** das Dichtungsmaterial in der Öffnung aus einzelnen Komponenten gebildet ist, die in separaten Kammern gekapselt sind.

35. Abdichtung nach dem vorhergehenden Anspruch, **dadurch gekennzeichnet, daß** die separaten Kammern an benachbarten Stellen je mindestens eine Sollbruchstelle aufweisen.

36. Verfahren zur Abdichtung zwischen einer ersten Wand und einer zweiten Wand gegen anstehendes Wasser wobei in den Raum der Öffnung zwischen den beiden Wänden zumindest teilweise längs des Querschnitts der Öffnung füllend ein Dichtungsmaterial eingebracht ist,
**dadurch gekennzeichnet, daß**
in den Raum der Öffnung als Dichtungsmaterial ein Dichtungsmaterial nach einem der Ansprüche 1 bis 23 eingebracht wird.

37. Verfahren nach dem vorhergehenden Anspruch, **dadurch gekennzeichnet, daß** vor oder nach dem Einbringen des Dichtungsmaterials die beiden Wände kraftschlüssig aneinander fixiert werden.

38. Verfahren nach einem der beiden vorhergehenden Ansprüche, **dadurch gekennzeichnet, daß** das Dichtungsmaterial in der Öffnung eingeschlossen wird.

39. Verfahren dem vorhergehenden Anspruch, **dadurch gekennzeichnet, daß** die Öffnung beidseitig mit einem Verschluß verschlossen wird.

40. Verfahren nach einem der beiden vorhergehenden Ansprüche, **dadurch gekennzeichnet, daß** die Öffnung beidseitig mittels Polyurethanschaum, Beton oder einer anderen aushärtenden Masse, einer Verschlußplatte und/oder einem Schraubverschluß verschlossen wird.

41. Verfahren nach einem der Ansprüche 36 bis 40, **dadurch gekennzeichnet, daß** die Öffnung verschlossen und anschließend das Dichtungsmaterial oder ein das Dichtungsmaterial ausbildendes Gemisch mehrerer Komponenten über eine Befüllöffnung in die Öffnung eingebracht wird.

42. Verwendung eines Dichtungsmaterials, einer Abdichtung und/oder eines Verfahrens nach einem der vorhergehenden Ansprüche zur Abdichtung von Mauerdurchführungen oder von Hausanschlüssen wie elektrischen Leitungen, Wasser- oder Abwasserableitungen, Gasleitungen, Telefonleitungen, zur Abdichtung zwischen Manschetten und Rohren, beispielsweise in Fernwärmesystemen, zur Kabelabdichtung zwischen Muffen und Kabel, zur Abdichtung zwischen Kabel und Verschlußkästen, beispielsweise im Bereich der Automobilindustrie, oder dergleichen.

43. Verwendung nach dem vorhergehenden Anspruch zur Abdichtung gegen anstehendes und/oder drückendes Grundwasser und/oder Oberflächenwasser und/oder Leitungswasser.

## Claims

1. Sealing material containing a swellable polymer and fillers
**characterized in that** a filler it contains comprises finely ground rubber and
the polymers and the fillers essentially have a particle size between 5 µm and 800 µm.

2. Sealing material according to the preceding claim, **characterized in that** fillers it contains comprise ground rubber, barite, silica, spar, basalt, ground wood, chalk, talcum, bentonite, lime, magnesium oxide, titanium oxide, dolomite, calcium carbonate, carbon black, zinc white, gypsum, kaolin, sand, mica, kieselguhr or mixtures thereof.

3. Sealing material according to either of the preceding claims, **characterized in that** the polymers and/or the fillers essentially have a particle size between 100 and 400 µm.

4. Sealing material according to any one of the preceding claims, **characterized in that** the polymers and the fillers have substantially identical particle sizes.

5. Sealing material according to any one of the preceding claims, **characterized in that** the fillers are present in a concentration of up to 95% by weight.

6. Sealing material according to any one of the preceding claims, **characterized in that** the fillers are present in a concentration between 5% by weight and 45% by weight.

7. Sealing material according to any one of the preceding claims, **characterized in that** a swellable material it contains comprises a superabsorbent synthetic polymer.

8. Sealing material according to any one of the preceding claims, **characterized in that** a swellable material it contains comprises a superabsorbent synthetic polymer selected from acrylates, methacrylates, polyacrylic acid and salts thereof, polymethacrylic acid and salts thereof, polyacrylamide, polyalcohols and also copolymers and/or mixtures of the specified polymers with polysaccharides.

9. Sealing material according to any one of the preceding claims, **characterized in that** it contains copolymers and/or mixtures of the synthetic swellable material with polysaccharides selected from alginates, alginic acid, amylose, amylopectin, callose, carrageenan, cellulose, chitin, dextran, guluronic acid, inulin, laminarin, lichenin, pullulan, pustulan, starch, starch derivatives and/or xanthan.

10. Sealing material according to any one of the preceding claims, **characterized in that** it contains crosslinking assistants and/or processing assistants.

11. Sealing material according to any one of the preceding claims, **characterized in that** it contains biocides and/or corrosion inhibitors.

12. Sealing material according to the preceding claim, **characterized in that** biocides it contains are alkyltrimethylammonium chloride, dialkyldimethylammonium chloride, dimethyldistearylammonium chloride, alkylbenzyldimethylammonium chloride, methosulphate and/or tallow fat imidazolinium methosulphate.

13. Sealing material according to either of the two preceding claims, **characterized in that** it contains a biocide in a concentration up to 25% by weight.

14. Sealing material according to any one of the three preceding claims, **characterized in that** a corrosion inhibitor it contains is urea.

15. Sealing material according to any one of the four preceding claims, **characterized in that** it contains corrosion inhibitors in a concentration up to 25% by weight.

16. Sealing material according to any one of the preceding claims, **characterized in that** it is enclosed in an elastic woven fabric tube.

17. Sealing material according to the preceding claim, **characterized in that** the woven fabric tube is between 10 mm and 50 mm in diameter.

18. Sealing material according to either of the two preceding claims, **characterized in that** the woven fabric tube is between 100 mm and 1 500 mm in length.

19. Sealing material according to any one of the three preceding claims, **characterized in that** the woven fabric tube comprises synthetic yarns, natural yarns and/or mixtures thereof.

20. Sealing material according to the preceding claim, **characterized in that** the tube comprises yarns between 5 dtex and 300 dtex in linear density.

21. Sealing material according to the preceding claim, **characterized in that** the tube comprises yarns between 20 dtex and 200 dtex in linear density.

22. Sealing material according to any one of the six preceding claims, **characterized in that** the tube additionally contains an elastic yarn.

23. Sealing material according to the preceding claim, **characterized in that** an elastic yarn which the tube additionally contains is elastane.

24. Seal between a first wall and a second wall against non-pressing water, wherein a sealing material has been introduced into the space of the opening between the two walls along some or all of the cross section of the opening,
**characterized by**
a sealing material according to any one of the preceding claims.

25. Seal according to the preceding claim, **characterized in that** the first wall is formed by a line (2) such as house service connections, electric lines, pipe lines (2) or the like and the second wall by an opening in an entity (1) such as a brickwork duct or a cable junction box, a bushing for cable entries or the like, through which the line is led.

26. Seal according to the preceding claim, **characterized in that** the line (2) is fixed to the entity (1) by non-positive means.

27. Seal according to the preceding claim, **characterized in that** the line (2) is non-positively joined to the entity (1) in the region of the opening by polyurethane foam, concrete or some other hardening composition or by threaded union.

28. Seal according to any one of Claims 24 to 27, **characterized in that** the sealing material is enclosed in the opening.

29. Seal according to the preceding claim, **characterized in that** the sealing material is enclosed by a closure on one or both sides of the opening.

30. Seal according to the preceding claim, **characterized in that** the closure consists of polyurethane foam, concrete or some other hardening composition, a blanking plate or a screw closure.

31. Seal according to any one of Claims 24 to 30, **characterized in that** the sealing material is encapsulated in an extensible liquid-permeable material.

32. Seal according to any one of Claims 24 to 31, **characterized in that** the sealing material is encapsulated in a biodegradable and/or a liquid-soluble material.

33. Seal according to any one of Claims 24 to 32, **characterized in that** the sealing material is surrounded by a material which has at least one predetermined breaking site.

34. Seal according to any one of Claims 24 to 33, **characterized in that** the sealing material in the opening is formed from individual components which are encapsulated in separate chambers.

35. Seal according to the preceding claim, **characterized in that** the separate chambers each have at least one predetermined breaking site at adjacent sites.

36. Process for sealing between a first wall and a second wall against non-pressing water, wherein a sealing material has been introduced into the space of the opening between the two walls along some or all of the cross section of the opening so as to fill it,
**characterized in that**
the sealing material introduced into the space of the opening is a sealing material according to any one of Claims 1 to 23.

37. Process according to the preceding claim, **characterized in that** the two walls are fixed to one another by non-positive means before or after the sealing material is introduced.

38. Process according to either of the two preceding claims, **characterized in that** the sealing material is enclosed in the opening.

39. Process according to the preceding claim, **characterized in that** the opening is closed on both sides using a closure.

40. Process according to either of the two preceding claims, **characterized in that** the opening is closed on both sides by means of polyurethane foam, concrete or some other hardening composition, a blanking plate and/or a screw closure.

41. Process according to any one of Claims 36 to 40, **characterized in that** the opening is closed and subsequently the sealing material, or a mixture of plural components which forms the sealing material, is introduced into the opening via a fill orifice.

42. Use of a sealing material, of a seal and/or of a process according to any one of the preceding claims for sealing off brickwork ducts or house service connections such as electric lines, water or wastewater exit lines, gas lines, telephone lines, for sealing between collars and pipes, for example in district heating systems, for cable sealing between bushings and cable, for sealing between cable and junction boxes, for example in the sector of the automotive industry, or the like.

43. Use according to the preceding claim for sealing off against pressing and/or non-pressing ground water and/or surface water and/or line water.

## Revendications

1. Matëriau d'étanchéité comportant un polymère susceptible de gonfler et des charges,
**caractérisé en ce que**
la charge est constituée au moins en partie par de la farine fine de caoutchouc, et
les polymères et les charges ont une granulométrie comprise principalement entre 5 µm et 800 µm.

2. Matériau d'étanchéité selon la revendication précédente,
**caractérisé en ce que**
la charge est au moins en partie de la farine de caoutchouc, de la baryte, de l'acide silicique, du spath, du balsalt, de la farine de bois, de la craie, du talc, de la bentonite, de la chaux, de l'oxyde de magnésium, de l'oxyda de titane, de la dolomite, du carbonate de calcium, du noir de fumée, du blanc de zinc, du gips, du Kaolin, du sable, du mica, du kiesel dur ou des mélanges.

3. Matériau d'étanchéité selon l'une quelconque des revendications précédentes,
**caractérisé en ce que**
les polymères et/ou les charges ont une granulométrie comprise principalement entre 100 et 400 µm.

4. Matériau d'étanchéité selon l'une quelconque des revendications précédentes,
**caractérisé en ce que**
les polymères et les charges ont pratiquement la même granulométrie.

5. Matériau d'étanchéité selon l'une quelconque des revendications précédentes.
**caractérisé en ce que**
les charges représentent une concentration allant jusqu'à 95 % en poids.

6. Matériau d'étanchéité selon l'une quelconque des revendications précédentes,
**caractérisé en ce que**
les charges sont présentes suivant une concentration comprise entre 5 % en poids et 45 % en poids.

7. Matériau d'étanchéité selon l'une quelconque des revendications précédentes,
**caractérisé en ce que**
la matière susceptible de gonfler contient au moins en partie un polymère de synthèse très absorbant.

8. Matériau d'étanchéité selon l'une quelconque des revendications précédentes,
**caractérisé en ce que**
la matière susceptible de gonfler contient au moins en partie un polymère de synthèse fortement absorbant, choisi dans le groupe formé par les acrylates, méthacrylates, acides polyacryliques et leurs sels, acides polyméthacryliques et leurs sels, polyacrylamides, et polyalcools ainsi que les copolymères et/ou des mélanges des polymères indiqués avec des polysaccharides.

9. Matériau d'étanchéité selon l'une quelconque des revendications précédentes,
**caractérisé en ce que**
les copolymères et/ou les mélanges de matière de synthèse susceptibles de gonfler avec des polysaccharides sont choisis dans le groupe suivant : alginates, acide alginique, amylose, amylopectine, callose, carragenan, cellulose, chitine, dextran, acide guluronique, insuline, laminarine, lichenine, pullulan, pustulan, amidon, dérivés de l'amidon et/ou xanthan.

10. Matériau d'étanchéité selon l'une quelconque des revendications précédentes,
**caractérisé en ce qu'**
il contient un additif de réticulation et/ou 'un agent de traitement.

11. Matériau d'étanchéité selon l'une quelconque des revendications précédentes,
**caractérisé en ce qu'**
il contient un biocide et/ou des inhibiteurs de corrosion.

12. Matériau d'étanchéité selon l'une quelconque des revendications précédentes.
**caractérisé en ce que**
le biocide est du chlorure d'alkyltriméthylammonium, du chlorure de dialkyldiméthylammonium, du chlorure de diméthyldistéalylammonium, du chlorure d'alkylbenzyldiméthylammonium, du méthosulfate et/ou d'imidazoliniumméthosulfate de suif.

13. Matériau d'étanchéité selon l'une quelconque des deux revendications précédentes,
**caractérisé en ce que**
le biocide est présent sur une concentration allant jusqu'à 25 % en poids.

14. Matériau d'étanchéité selon l'une quelconque des trois revendications précédentes.
**caractérisé en ce que**
l'inhibiteur de corrosion est de l'urée.

15. Matériau d'étanchéité selon l'une quelconque des quatre revendications précédentes,
**caractérisé en ce que**
les inhibiteurs de corrosion sont présents suivant une concentration allant jusqu'à 25 % en poids.

16. Matériau d'étanchéité selon l'une quelconque des revendications précédentes,
**caractérisé en ce que**
cette matière est contenue dans un tube tissé élastique.

17. Matériau d'étanchéité selon l'une quelconque des revendications précédentes,
**caractérisé en ce que**
le tube tissé a un diamètre compris entre 10 mm et 50 mm.

18. Matériau d'étanchéité selon l'une quelconque des revendications précédentes.
**caractérisé en ce que**
le tube tissé a une longueur comprise entre 100 mm et 1500 mm.

19. Matériau d'étanchéité selon l'une quelconque des trois revendications précédentes,
**caractérisé en ce que**
le tube tissé est formé au moins en partie de fils de synthèse, de fils naturels et/ou de mélanges de ceux-ci.

20. Matériau d'étanchéité selon l'une quelconque des revendications précédentes,
**caractérisé en ce que**
le tube tissé est formé au moins en partie de fils ayant une épaisseur comprise entre 5 dtx et 300 dtx.

21. Matériau d'étanchéité selon l'une quelconque des revendications précédentes,
**caractérisé en ce que**
le tube est formé au moins en partie de fils ayant une épaisseur comprise entre 20 dtx et 200 dtx.

22. Matériau d'étanchéité selon l'une quelconque des revendications précédentes,
**caractérisé en ce que**
le tube contient un fil supplémentaire élastique.

23. Matériau d'étanchéité selon l'une quelconque des revendications précédentes,
**caractérisé en ce que**
le tube contient comme fil supplémentaire élastique de l'élastane.

24. Joint d'étanchéité entre une première paroi et une seconde paroi, pour se protéger contre des retenues d'eau, selon lequel dans l'espace de l'ouverture entre les deux parois, au moins le long de la section de l'ouverture, on introduit un moyen d'étanchéité **caractérisé en ce qu'**il correspond aux revendications précédentes.

25. Joint d'étanchéité selon la revendication précédente,
**caractérisé en ce que**
la première paroi est formée par une conduite (2) telle qu'un branchement d'habitation, de lignes électriques, de conduites tubulaires (2) ou analogues et de la seconde paroi constituée par une ouverture dans un objet (1) tel qu'un passage de mur ou un caisson de fermeture de câbles. un manchon avec des passe-câbles ou analogues à travers lesquels passe la conduite.

26. Joint d'étanchéité selon la revendication précédente,
**caractérisé en ce que**
la conduite (2) est bloquée par la force contre l'objet (1).

27. Joint d'étanchéité selon la revendication précédente,
**caractérisé en ce que**
la conduite (2) est reliée au niveau de l'ouverture avec l'objet (1) par une mousse de polyuréthane, du béton ou autre matière susceptible de prendre et la liaison est faite par la force par vissage.

28. Joint d'étanchéité selon l'une quelconque des revendications 24 à 27,
**caractérisé en ce que**
le matériau d'étanchéité est emprisonné dans l'ouverture.

29. Joint d'étanchéité selon la revendication précédente,
**caractérisé en ce que**
la matière du Joint d'étanchéité est emprisonnée par une fermeture d'un côté ou des deux côtés de l'ouverture.

30. Joint d'étanchéité selon la revendication précédente,
**caractérisé en ce que**
la fermeture est faite de mousse de polyuréthane, de béton et d'une autre masse durcissable, d'une plaque de fermeture ou d'une liaison à vis.

31. Joint d'étanchéité selon l'une quelconque des revendications 24 à 30,
**caractérisé en ce que**
le matériau d'étanchéité est encapsulé dans une matière extensible, perméable au liquide.

32. Joint d'étanchéité selon l'une quelconque des revendications 24 à 31.
**caractérisé en ce que**
le matériau d'étanchéité est encapsulé dans une matière biologiquement décomposable et/ou facilement soluble dans un liquide.

33. Joint d'étanchéité selon l'une quelconque des revendications 24 à 32,
**caractérisé en ce que**
le matériau d'étanchéité est entouré d'une matière ayant au moins un point de rupture de consigne.

34. Joint d'étanchéité selon l'une quelconque des revendications 24 à 33.
**caractérisé en ce que**
le matériau d'étanchéité est formé dans l'ouverture à partir de composants séparés qui sont encapsulés dans des chambres séparées.

35. Joint d'étanchéité selon la revendication précédente.
**caractérisé en ce que**
les chambres séparées présentent en des points voisins, chaque fois au moins un point de rupture de consigne.

36. Procédé pour réaliser l'étanchéité entre une première paroi et une seconde paroi contre de l'eau retenue, selon lequel dans l'espace de l'ouverture entre les deux parois, au moins en partie le long de la section de l'ouverture on a un remplissage de matériau d'étanchéité,
**caractérisé en ce qu'**
on introduit un matériau d'étanchéité selon l'une quelconque des revendications 1 à 23 dans le volume de l'ouverture comme matière d'étanchéité.

37. Procédé selon la revendication précédente
**caractérisé en ce qu'**
avant ou après la mise en place du matériau d'étanchéité, on bloque l'une à l'autre les deux parois par une liaison par la force.

38. Procédé selon l'une quelconque des deux revendications précédentes.
**caractérisé en ce qu'**
on emprisonne le matériau d'étanchéité dans l'ouverture.

39. Procédé selon la revendication précédente,
**caractérisé en ce qu'**
on ferme l'ouverture des deux côtés avec un moyen de fermeture.

40. Procédé selon l'une quelconque des deux revendications précédentes,
**caractérisé en ce que**
l'ouverture est fermée des deux côtés par de la mousse de polyuréthane, du béton ou une autre masse durcissable, une plaque de fermeture et/ou une liaison vissée.

41. Procédé selon l'une quelconque des deux revendications 36 à 40,
**caractérisé en ce qu'**
on ferme l'ouverture et ensuite on introduit le matériau d'étanchéité ou un mélange formé du matériau d'étanchéité et de plusieurs composants par un orifice de remplissage pour arriver dans l'ouverture;

42. Application d'un matériau d'étanchéité, d'un joint d'étanchéité et/ou d'un procédé selon l'une quelconque des revendications précédentes pour réaliser l'étanchéité de traversée ou de passage de mur ou de branchement d'immeuble comme par exemple des lignes électriques, des lignes d'alimentation ou d'évacuation en eau, des conduites de gaz, des lignes téléphoniques, pour assurer l'étanchéité entre les manchons et les tubes par exemple dans les systèmes de chauffage urbain, pour des joints de câble entre des moufles et le câble, pour assurer l'étanchéité entre le câble et la boîte de fermeture, par exemple dans le domaine de l'industrie automobile, ou industries similaires.

43. Application selon la revendication précédente pour réaliser l'étanchéité vis-à-vis de l'eau de la nappe phréatique, retenue et/ou en poussée et/ou des eaux de surface et/ou de l'eau de canalisation.
